# EUROPEAN PATENT APPLICATION

(11) **EP 1 275 525 A2**
(43) Date of publication of application: **15.01.2003**
(21) Application number: 02254619.6
(22) Date of filing: 01.07.2002
(51) Int. Cl.: B60B 27/00

(54) **Hub arrangement**

(30) Priority: 10.07.2001 GB 0116739
(71) Applicant: Starco GB Limited, Rugeley, Staffordshire WS15 1UZ (GB)
(72) Inventor: Cooper, Robert William, Starco GB Limited, Rugeley, Staffordshire WS15 1UZ (GB)
(74) Representative: Lock, Howard John

(57) **Abstract**

A hub arrangement (10) comprises a bearing housing (12) and bearing means (14, 16) held within the housing. The bearing means (14, 16) comprises first and second bearing races (18, 20) and a plurality of roller members (22) held between the races. The arrangement (10) further includes support means (26) extending from the first bearing race (18) to the second bearing race (20) to overlap the second bearing race. The bearing means (14, 16) is mandate on an axle (100) to rotatably support the housing.

## Description

This invention relates to hub arrangements. More particularly, but not exclusively, the invention relates to hub arrangements for wheels for use on static caravans.

The wheels on static caravans are generally used on only a few occasions, for example to move the caravan around the factory and to manipulate the caravan at the caravan park. As a result, the wheels do not have to bear the loads and stresses than would be the case if the wheels were used to transport the caravan over great distances.

This has meant that cost considerations in the design of the wheels is particularly important, and there has been, on occasion, circumstances in which the bearings in the wheels have failed. This has resulted in somewhat disastrous consequences, because the failure of the bearings results in complete collapse of the wheel, rendering the caravan immovable, causing serious consequential damage to the caravan, and a potentially dangerous situation for anyone in the vicinity.

According to one aspect of this invention, there is provided a hub arrangement comprising a bearing housing and bearing means held within the housing, the bearing means comprising first and second bearing races and a plurality of roller members held between the races, and the arrangement further including support means extending from the first bearing race to the second bearing race to overlap the second bearing race, wherein the bearing means is mountable on an axle to rotatably support the housing on the axle.

The support means provides the advantage in the preferred embodiment that it supports the bearing housing on the axle in the event of failure of the bearing means. Preferably, the support means is spaced from the second bearing race and desirably engages the first bearing race.

The second bearing race may engage the bearing housing and the support means may be spaced from the bearing housing, for example by at least 0.05mm. Alternatively, the second bearing race may be engageable with the axle, and the support means may be positioned to be spaced from the axle, for example by at least 0.05mm.

In the preferred embodiments, the first bearing race may be engageable with the axle and the second bearing race may engage the bearing housing.

The support means preferably comprises an annular member, or a pair of annular members, which can extend radially around the axle. Preferably, the bearing means comprises two bearings each having said first and second bearing races. Each bearing race may have inner and outer faces, wherein the inner faces of opposite bearing races face towards each other, and the outer faces of opposite bearing races face away from each other. Preferably, the first race of each bearing engages the axle and the second race of each bearing engages the housing.

The support means may include at least one radially outwardly extending support member to overlap the inner faces of the respective second races.

In a first embodiment, the support member constitutes a single outwardly extending support portion of the support means, and a spacer engaging the opposite inner faces of the first races. The support portion may extend from the spacer to overlap the second races of both bearings and preferably extends between, but is desirably spaced from, preferably closely spaced from, the inner faces of the respective second races. The spacer preferably constitutes a spacer portion of the support means. In this embodiment, the support portion may be in the form of a cylinder. The support portion preferably extends from the spacer to a region adjacent the inner surface of the bearing housing. The support portion is preferably spaced from the inner surface of the housing by a sufficient distance that the support member substantially does not engage the housing during normal use of the hub arrangement. A suitable such distance is at least substantially 0.05mm.

In a second embodiment, the support means has two spaced radially outwardly extending annular support members, which are preferably arranged in engagement with the inner face of the first races of each respective bearing. Each of said support members preferably extends from said first race to overlap the second race, and is preferably spaced from the inner face of the respective second race. In this embodiment, each of the outwardly extending members is generally in the form of an annular disc, and may have a generally centrally arranged shoulder defining a generally centrally arranged annular projection on the annular member. Preferably, the axially extending projection engages the inner face of the first race. Each annular member is desirably spaced from the inner face of the respective second race. Preferably, each support member is spaced from the inner surface of the bearing housing by a sufficient distance that each support member does not engage the housing during normal use of the hub arrangement, for example at least substantially 0.05mm. A spacer may extend between the two annular support members.

In the above first and second embodiments, the arrangement further includes retaining means to retain the bearings in place. Preferably, the retaining means comprises a pair of annular elements and, each annular element may be arranged in engagement with the outer face of a respective one of the second races. Preferably, the annular elements comprise circlips. Preferably, the bearing housing defines recesses, which are preferably annular, to receive the retaining means.

In another embodiment, the support means comprises a pair of annular members arranged in engagement with the outer face of the first race and extending to the second race to overlap the second race. Each annular member is desirably spaced from the outer face of the respective second race. Preferably, each annular member comprises an annular disc, and may have a generally centrally arranged shoulder defining a generally circular axially extending annular projection on the annular member. Preferably, the axially extending projection engages the outer face of the first race. Each annular member preferably extends from the first race to a region adjacent the inner surface of the bearing housing. Each support member is preferably spaced from the inner surface of the bearing housing by a sufficient distance that each support member does not engage the housing during normal use of the hub arrangement.

In a further embodiment, the support means comprises a first annular member engaging the outer face of the first bearing race of the one of the bearings. Preferably the annular member engages the first bearing race of the outer bearing. The annular member may comprise a washer which can be engaged by securing means securing the hub arrangement to the axle.

The support means preferably further includes a second annular member which may be mountable on the axle to engage the outer face of the first bearing race of the other bearing. Preferably, the second annular member can be fixed to the axle by suitable fixing means, for example by welding.

The, or each, annular member preferably includes a face and a projection may extend axially from said face to engage the respective bearing. The, or each, annular member may be spaced from the respective second race of each bearing. The, or each, annular member preferably includes an annular surface spaced from the inner annular surface of the bearing housing.

Embodiments of the invention will now be described by way of example only, with reference to the accompanying drawings, in which:-
Fig. 1 is a sectional side view of a wheel incorporating a first embodiment of a hub arrangement;
Fig. 2 is a sectional side view of the embodiment of the hub arrangement shown in Fig. 1;
Fig. 3 is a sectional side view of a second embodiment of a hub arrangement;
Fig. 4 is a sectional side view of a third embodiment of a hub arrangement; and
Fig. 5 is a sectional side view of a fourth embodiment of a hub arrangement.

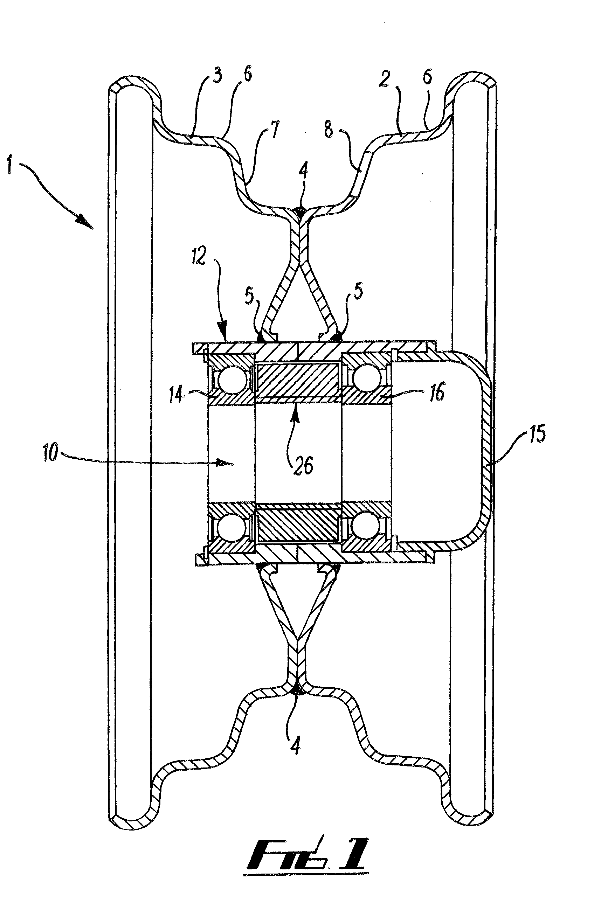

Referring to Fig. 1 there is shown a wheel 1 for a static caravan. The wheel 1 comprises a first embodiment of a hub arrangement 10, having a bearing housing 12 which houses bearing means in the form of first and second bearings 14,16.

Annular support means 26 extend between the bearings 14,16 and, as will be explained below in more detail, spaces the first and second bearings 14,16 from each other and provides support for the bearing housing in the event of failure of one or both of the bearings 14,16.

The wheel 1 further includes a pair of wheel members 2,3 which are circular in configuration and are generally a mirror image of each other. The wheel members 2,3 engage each other generally centrally of each other and are welded together by circular welds 4. The wheel members 2,3 are welded to the bearing housing by circular welds 5, generally symmetrically about the bearings 14, 16. The radially outer faces 6 of the wheel members 2,3 define together a tyre receiving annular recess 7 to enable a tyre (not shown) to be fitted to the wheel 1.

The wheel member 2 faces outwardly of the wheel and defines an aperture 8 through which the tyre valve (not shown) can protrude.

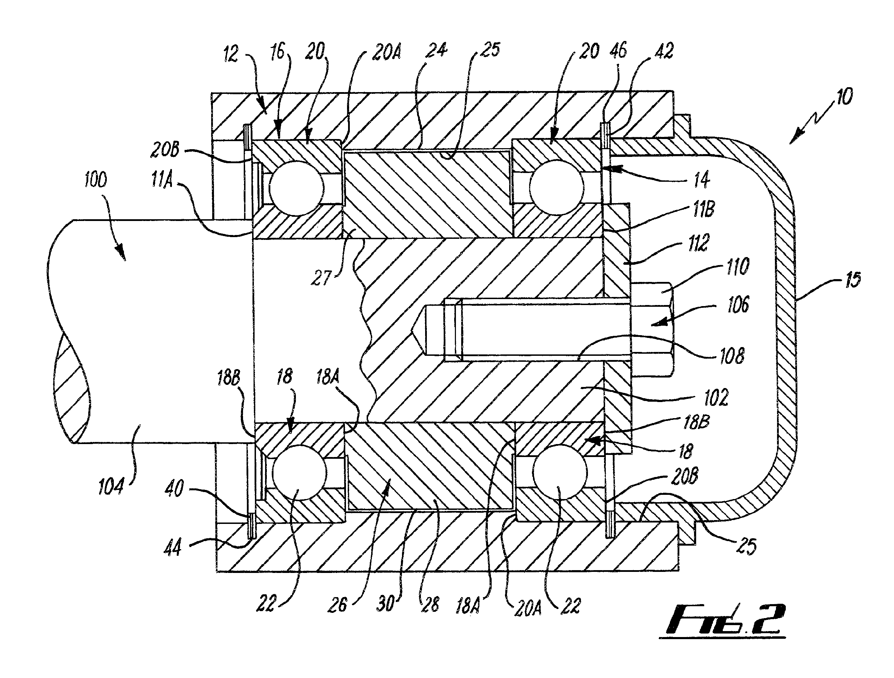

The hub arrangement 10 of the wheel shown in Fig. 1 is shown in more detail in Fig. 2.

The hub arrangement 10 is mounted on a stub axle 100 of a static caravan in a manner that would be known in the art.

The stub axle 100 comprises a shaft 102 upon which the hub arrangement 10 is mounted and a larger diameter part 104 against which an inner end 11A of the hub arrangement 10 can engage. At the opposite outer end 11B of the hub arrangement 10, there is provided a bolt 106 which is threadably received within a threaded aperture 108 in the shaft 102. The head 110 of the bolt 106 engages a washer 112 which, in turn, engages the opposite outer end 11B of the hub arrangement 10. A hub cap 15 is fitted over the outwardly facing end of the hub arrangement 10, as shown.

Each of the bearings 14,16 comprises a first generally annular, radially inner, race 18 having an axially inner face 18A and an axially outer face 18B. When the hub arrangement 10 is mounted on the shaft 102, each first race 18 engage the shaft 102. The larger diameter pane 104 of the axle 100 engages the first race 18 of the second bearings 16, and the washer 112 engages the first race 18 of the first bearing 14.

Each bearing 14,16 also includes a second generally annular radially outer bearing race 20 having an axially inner face 20A and an axially outer face 20B. The second bearing race 20 is arranged in secure engagement with the housing 12. A plurality of roller members in the form of balls 22 are held between the respective first and second races 18,20.

The first and second bearings 14,16 are spaced from each other towards the opposite ends 11A, 11B of the housing 12. An annular shoulder 24 extends radially inwardly of the housing 12 and engages the inner faces 20A of the respective second races 20. As a result of the shoulder 24, the bearing housing 12 has a stepped annular inner surface 25.

An annular support means 26 extends between the inner faces of the first races 18, and includes a spacer portion 27 which is of such a length so as to engage the inner faces 18A of the first races 18, thereby ensuring that the bearings 14,16 are spaced from each other by the appropriate distance.

The annular support means 26 also includes a support portion 28 which extends radially outwardly from the spacer portion 27. The support portion 28 is in the form of a cylinder, and the opposite ends thereof are spaced from the inner faces 20A of the two outer bearing races 20. The support portion 28 extends from the spacer portion 27 to the shoulder 24 of the housing 12, such that each support portion 28 overlaps the second race 20 of the respective bearing 14,16.

The support portion 28 has an outer annular surface 30 which is spaced from the inner annular surface 25 of the bearing housing 12 at the shoulder 24. Thus, the support means 26 provides a spacer portion 27 which ensures that the two bearings 14,16 are spaced from each other and also provides the support portion 28 to support the bearing housing 12 in the event of failure of one or both of the bearings 14,16. In the event of such a failure, the bearing housing 12 would collapse against the outer surface 30 of the support portion 28, thereby preventing complete collapse of the wheel.

In order to ensure that the outer races 20 of the bearings 14,16 are held against the spacer portion 27 and the shoulder 24, retaining means in the form of a pair of circlips 40,42 are provided in respective annular recesses 44,46 in the bearing housing 12. The circlips 40,42 engage the outer faces 20B of the second bearing races 20 of the respective two bearings 14,16.

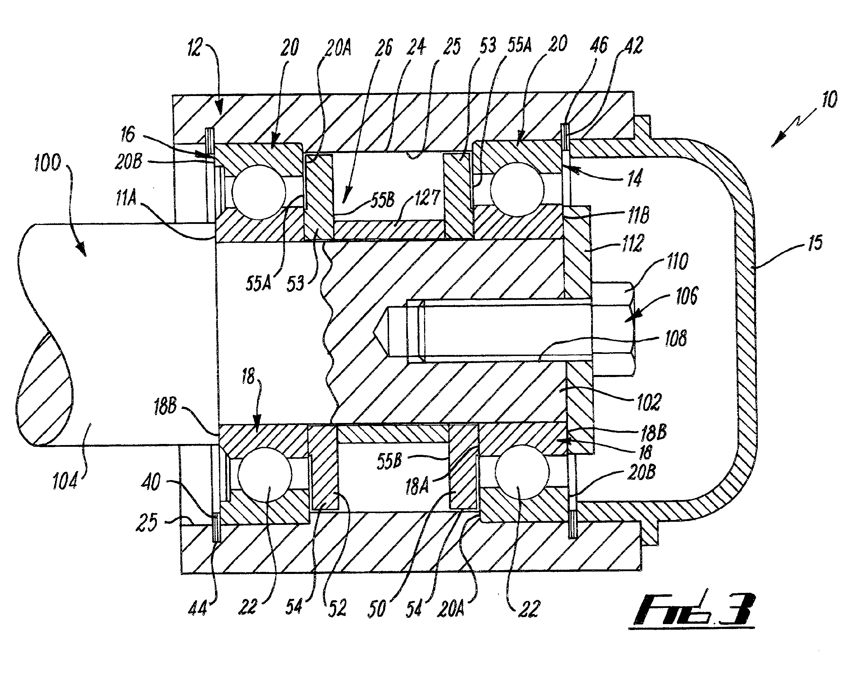

Referring to Fig. 3, there is shown a second embodiment of the invention which comprises all the features of the embodiment shown in Fig. 2, and these have been designated with the same reference numeral. The embodiment shown in Fig. 3 differs from the embodiment shown in Fig. 2 in that the support means 26 comprises a pair of spaced annular support members in the form of discs 50,52, and a spacer member 127 extending between, and in engagement with, the annular support discs 50,52. Each annular support disc 50,52 has a projection 53 extending axially from a first face 55A and extending around the central region of the annular support discs 50,52. The projection 53 engages the inner face 18A of each respective first bearing races 18. The projections 53 extend from one face of each respective support disc 50,52 and the second faces 55B are engaged by the respective opposite ends of the annular spacer member 127. Each annular support disc 50,52 has an outer annular surface 54 which is spaced from the inner annular surface 25 of the bearing housing 12 at the shoulder 24. In addition, the annular members 50,52 overlap the second race 20 of each respective bearing 14,16 and the first face 55A of each support member 50,52 is spaced from the inner face 20A of each respective second race 20 of the respective bearing 14,16. The annular surface 54 of each of the annular members 50,52 is spaced from the inner annular surface 25 of the shoulder 24 by a distance of at least 0.05mm.

The annular members 50,52 perform the same function as the support portion 28 of the embodiment shown in Fig. 2, in that, in the event of failure of one or both of the bearings 14,16 the annular members 50,52 can support the bearing housing 12 thereby preventing complete collapse of the wheel.

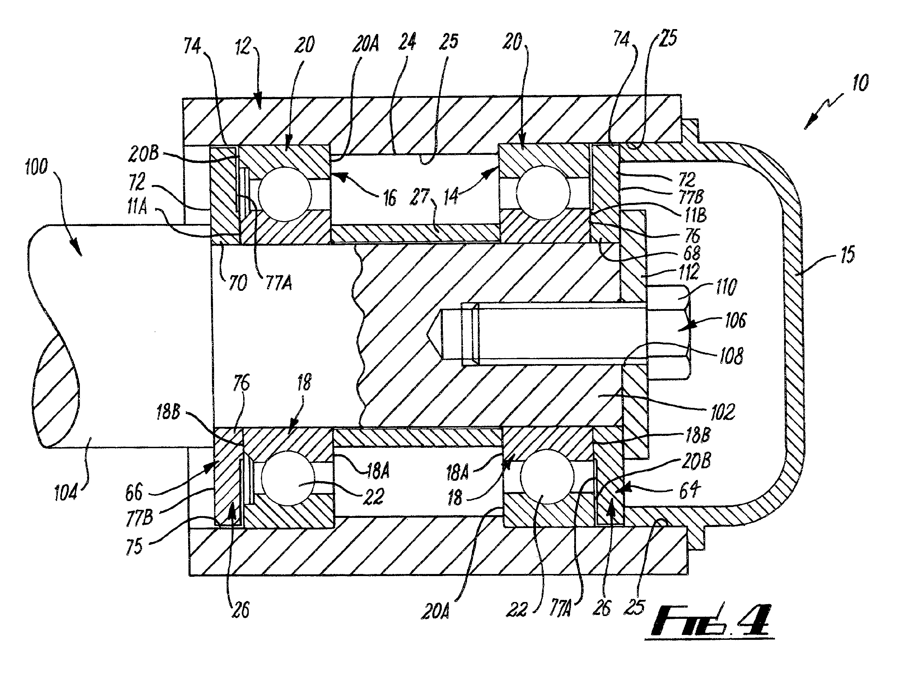

A third embodiment is shown in Fig. 4, and, again, this includes many of the same features as shown in Fig. 2, and these have been designated with the same reference numeral.

Fig. 4 differs from Fig. 2 in that the support means 26 comprises a pair of annular members 64,66 provided on the outside of the bearings 14,16, such that each support member engages the respective outer face 18B of each respective first bearing race 18.

In the embodiment shown in Fig. 4, the shaft 102 extends beyond the bearings 14,16 to provide gaps 68,70 to receive respective annular members 64,66. Each of the annular members 64,66 is in the form of a disc 72 extending from the shaft 102 to the second race 20 of the respective bearing 14,16. Each annular member 64,66 also includes a projection 76 extending axially from a first face 77A of each respective support disc 72. The projection 76 extends around the central region of the support disc 72 which engages the outer face 18B of the first race 18 of each respective bearing 14,16. The support disc 72 has an outer annular curved surface 74 which is spaced from the inner annular curved surface 25 of the bearing housing 12. The discs 72 have respective reverse faces 77B when the reverse face 77B of the discs 72 at the first bearing 14 is engaged by the washer 112. The reverse face 77B of the disc 72 at the bearing 14 engages the portion 104 of the axle 100.

The annular support disc 72 provides generally the same function as the support means shown in Figs. 1 and 2, in that in the event of failure of the first or second bearings 14,16, the bearing housing 12 is supported by the two support discs 72.

In addition to the support member 64, there is also provided an annular spacer member 227 which extends between the inner faces of the first races of the two bearings 14,16 thereby preventing the bearings 14,16 being pushed together.

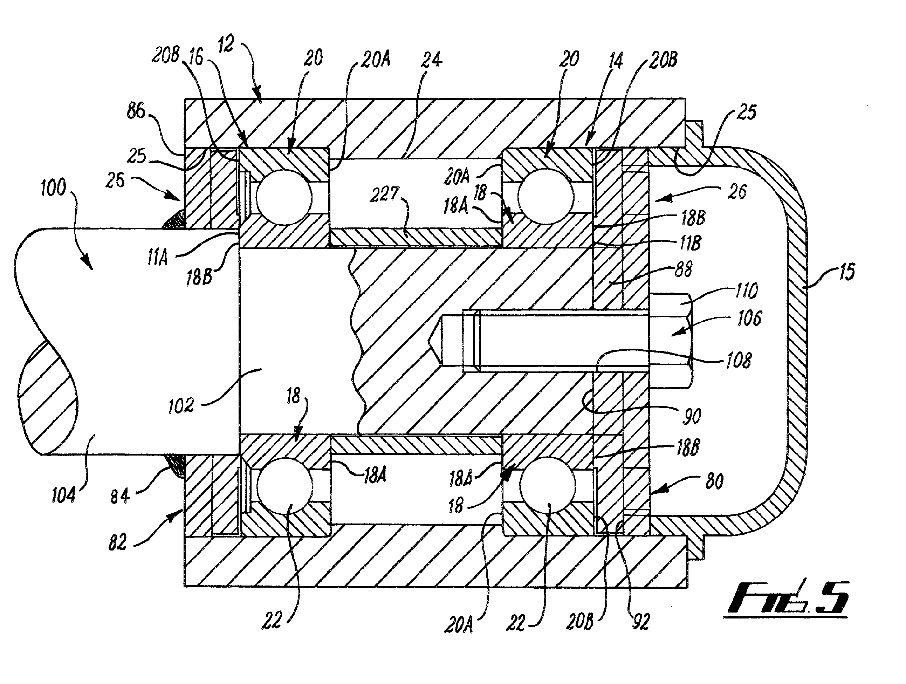

A fifth embodiment is shown in Fig. 5 and this includes many of the same features as the embodiment shown in Fig. 4, and these have been designated with the same reference numerals. Fig. 5 is similar to the embodiment shown in Fig. 4 in that the support means 26 comprises a pair of annular members, designated 80,82 in Fig. 4, provided on the outside of the bearings 14,16.

In the embodiment shown in Fig. 5, the annular support member 80 is in the form of a washer and is secured to the axle 100 by a bolt 106 threadably received in the threaded bore 108 of the shaft 102. The head 110 of the bolt 106 engages the washer 80. The washer 80 includes an annular projection 88 which extends axially from a first face 90 of the washer 80. The annular projection 88 engages the end of the shaft 102 and also engages the outer face 18B of the first race 18 of the bearing 14.

The washer 80 extends from the bolt 106 to overlap the second race 20 of the bearing 16. The obverse face 90 of the washer 80 is spaced from the outer face 20B of the bearing 16. The washer 80 has an outer annular cylindrical surface 92 which is closely spaced, as described above, from the inner surface 25 of the bearing housing 12.

The annular support member 82 is fixedly mounted on the larger diameter portion 104 by a circular weld 84. The annular member 82 has an outer annular and cylindrical surface 86 which is closely spaced from the inner annular surface 25 of the bearing housing 12 by a sufficient distance that the annular member 82 substantially does not engage in the surface 25 of the housing 12, for example at least 0.05mm. The outer face 18B of the bearing 16 is engaged by the larger diameter part 104 of the axle 100.

In each of the above embodiments, the support means 26 is formed of a load bearing material, for example steel.

Various modifications can be made without departing from the scope of the invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A hub arrangement comprising a bearing housing and bearing means held within the housing, the bearing means comprising first and second bearing races and a plurality of roller members held between the races, **characterised in that** the arrangement further includes support means extending from the first bearing race to the second bearing race to overlap the second bearing race, wherein the bearing means is mountable on an axle to rotatably support the housing on the axle.

2. A hub arrangement according to claim 1 **characterised in that** the support means is spaced from the second bearing race and engages the first bearing race.

3. A hub arrangement according to claim 1 or 2 **characterised in that** the second bearing race engages the bearing housing and the support means is spaced from the bearing housing but sufficiently close to support the hub arrangement in the event of failue of one or both of the bearing means.

4. A hub arrangement according to claim 1 or 2 **characterised in that** the second bearing race is engageable with the axle, and the support means is positioned to be spaced from the axle.

5. A hub arrangement according to any preceding claim **characterised in that** the first bearing race is engageable with the axle and the second bearing race engages the bearing housing.

6. A hub arrangement according to any preceding claim **characterised in that** the support means comprises an annular member, or a pair of annular members, which can extend radially around the axle.

7. A hub arrangement according to any preceding claim **characterised in that** the bearing means comprises two bearings each having said first and second bearing races, each bearing race having inner and outer faces, wherein the inner faces of opposite bearing races face towards each other, and the outer faces of opposite bearing races face away from each other, and the first race of each bearing engages the axle and the second race of each bearing engages the housing.

8. A hub arrangement according to any preceding claim **characterised in that** the support means includes at least one radially outwardly extending support member to overlap the inner faces of the respective second races.

9. A hub arrangement according to any preceding claim **characterised in that** the support member comprises a single outwardly extending support portion of the support means, and a spacer engaging the opposite inner faces of the first races, the support portion extending from the spacer to overlap the second races of both bearings and extending between, but spaced from, the inner faces of the respective second races.

10. A hub arrangement according to claim 9 **characterised in that** the spacer comprises a spacer portion of the support means, and the support portion is in the form of a cylinder, the support portion extending from the spacer to a region adjacent the inner surface of the bearing housing.

11. A hub arrangement according to claim 10 **characterised in that** the support portion is preferably spaced from the inner surface of the housing by a sufficient distance that the support member substantially does not engage the housing during normal use of the hub arrangement.

12. A hub arrangement according any of claims 1 to 8 **characterised in that** the support means has two spaced radially outwardly extending annular support members, which are arranged in engagement with the inner face of the first races of each respective bearing, and each of said support members extends from said first race to overlap the second race, and is spaced from the inner face of the respective second race.

13. A hub arrangement according to claim 12 **characterised in that** each of the outwardly extending members is generally in the form of an annular disc, and has a generally centrally arranged shoulder defining a generally centrally arranged axially extending projection on the annular member.

14. A hub arrangement according to claim 13 **characterised in that** the axially extending projection engages the inner face of the first race, and each annular member is spaced from the inner face of the respective second race.

15. A hub arrangement according to claim 14 **characterised in that** each support member is spaced from the inner surface of the bearing housing by a sufficient distance that each support member does not engage the housing during normal use of the hub arrangement.

16. A hub arrangement according to any of the preceding claims **characterised in that** the arrangement further includes retaining means to retain the bearings in place, the retaining means comprising a pair of annular elements and, each annular element arranged in engagement with the outer face of a respective one of the second races.

17. A hub arrangement according to any of claims 1 to 8 **characterised in that** the support means comprises a pair of annular members arranged in engagement with the outer face of the first race and extending to the second race to overlap the second race, each annular member being spaced from the outer face of the respective second race.

18. A hub arrangement according to claim 17 **characterised in that** each annular member comprises an annular disc, and has a generally centrally arranged shoulder defining a generally circular axially extending annular projection on the annular member, the axially extending projection engaging the outer face of the first race.

19. A hub arrangement according to claim 18 **characterised in that** each annular member extends from the first race to a region adjacent the inner surface of the bearing housing, and each support member is spaced from the inner surface of the bearing housing by a sufficient distance that each support member does not engage the housing during normal use of the hub arrangement.

20. A hub arrangement according to any of claims 1 to 8 **characterised in that** the support means comprises a first annular member engaging the outer face of the first bearing race of the one of the bearings, and the support means further includes a second annular member mountable on the axle to engage the outer face of the first bearing race of the other bearing.

21. A hub arrangement according to claim 20 **characterised in that** the, or each, annular member includes a face and a projection extending axially from said face to engage the respective bearing, the, or each, annular member being spaced from the respective second race of each bearing, and the, or each, annular member including an annular surface spaced from the inner annular surface of the bearing housing.

22. A hub arrangement according to any preceding claim.

23. A vehicle including a wheel assembly to claim 22.

24. Any novel subject matter or combination including novel subject matter disclosed herein, whether or not within the scope of or relating to the same invention as any of the preceding claims.
